Europäisches Patentamt

European Patent Office

Office européen des brevets

(19)

(11) Veröffentlichungsnummer: **0 165 399**
**B1**

(12) **EUROPÄISCHE PATENTSCHRIFT**

(45) Veröffentlichungstag der Patentschrift:
**22.06.88**

(21) Anmeldenummer: **85104531.0**

(22) Anmeldetag: **15.04.85**

(51) Int. Cl.⁴: **C 08 G 63/60**, D 01 F 6/84,
C 08 J 5/18

(54) Thermotrope aromatische Polyester mit hoher Steifigkeit und Zähigkeit, Verfahren zu ihrer Herstellung und ihre Verwendung zur Herstellung von Formkörpern, Filamenten, Fasern und Folien.

(30) Priorität: **26.04.84 DE 3415530**

(43) Veröffentlichungstag der Anmeldung:
**27.12.85 Patentblatt 85/52**

(45) Bekanntmachung des Hinweises auf die Patenterteilung:
**22.06.88 Patentblatt 88/25**

(84) Benannte Vertragsstaaten:
**DE FR GB IT**

(56) Entgegenhaltungen:
**DE - A - 2 025 971**
**US - A - 4 232 143**
**US - A - 4 377 681**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Dicke, Hans-Rudolf, Dr.,
Bodelschwinghstrasse 16, D-4150 Krefeld (DE)**
Erfinder: **Bottenbruch, Ludwig, Dr., Wöhler-Strasse 5,
D-4150 Krefeld (DE)**
Erfinder: **Freitag, Dieter, Dr., Hasenheide 10,
D-4150 Krefeld (DE)**
Erfinder: **El Sayed, Aziz, Dr., Saarlauternerstrasse 39,
D-5090 Leverkusen (DE)**

## Beschreibung

Die Erfindung betrifft hochmolekulare thermotrope vollaromatische Polyester mit hoher Steifigkeit, Schlagzähigkeit und günstiger Schmelzviskosität, ein Verfahren zu ihrer Herstellung und ihre Verwendung zur Herstellung von Formkörpern, Filamenten, Fasern und Folien.

Als «thermotrop» bezeichnet man solche Polykondensate, die flüssig-kristalline Schmelzen bilden. Sie sind hinreichend bekannt, vergleiche z. B. F. E. McFarlane et al., Liquid Crystal Polymers II, Contemporary Topics in Polymer Science, Vol. 2, Plenum Publishing Corporation, 1977; W. J. Jackson und H. F. Kuhfuss, J. Polymer Science, Polymer Chem. Ed. 14, 2042 (1976); W. C. Wooten et al. in A. Ciferri «Ultra-high Modulus Polymers», Applied Science Publ., London 1979, S. 362 f.; A. Blumenstein et al., «Liquid Crystalline Order in Polymers», Academic Press 1978; A. Ciferri, W. R. Krigbaum, R. B. Meyer «Polymer Liquid Crystals», Academic Press, New York, 1982; EP 1185, 1340, 8855, 11640, 15856, 17310, 18145, 18709, 22344, 44205, 49615; US 3991013, 3991014, 4066620, 4067852, 4083829, 4107143; WO 79/797, 79/1034, 79/1040.

Der flüssig-kristalline Zustand von Polymerschmelzen lässt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Messverstärkers mit Regeleinrichtung wurde der Messwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 µm.

Die Untersuchung der Polymeren erfolgte nach dem Aufschmelzen der Proben bei Temperaturen zwischen 280 und 400 °C. Sofern in diesem gesamten Bereich oder in einem Teil davon eine Aufhellung der zwischen den gekreuzten Nicolschen Prismen beobachteten, ruhenden Schmelze auftrat, wurde das Polykondensat als thermotrop flüssig-kristallin eingestuft.

Die flüssig-kristallinen Polykondensate zeigen in der Messanordnung Werte über 1 Skalenteil, meist Werte von 3 bis 90 Skalenteilen. Für amorphe Schmelzen, z. B. aromatische Polycarbonate, wurden dagegen Werte von weniger als 0,1 Skalenteile gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z. B. bei G. W. Gray und P. A. Windsor, «Plastic Crystals, Physico-Chemical Properties and Methods of Investigation», insbesondere Chapter 3, John Wiley & Sons, New York, Sydney, Toronto 1974 beschrieben ist.

Die DE-OS 20 25 971 betrifft hochmolekulare voll-aromatische Polyester auf Basis von p-Hydroxybenzoesäure, aromatischen Dicarbonsäuren (wie Terephthal- und Isophthalsäure) und Diphenolen (wie Hydrochinon oder 4,4'-Dihydroxybiphenyl). Aufgrund der verwendeten Komponenten sind diese Polyester thermotrop. Sie können z. B. zu Fasern verarbeitet werden. Von den 13 Polyestern der Beispiele schmilzt ein einziger unter 300 °C. Diese Polyester sind also schlecht verarbeitbar.

Formkörper, die aus flüssig-kristalliner Schmelze hergestellt werden, weisen mechanische Festigkeiten auf, wie sie normalerweise bei unverstärkten, aus isotroper Schmelze verarbeiteten Polykondensaten nicht gefunden werden; jedoch lässt die Zähigkeit solcher Formkörper manche Wünsche offen (vgl. US 42 42 496, EP 44 175, W. J. Jackson jr., Brit. Polym. J. 12, 154 (1980). Durch eigene Untersuchungen wurde bestätigt, dass thermotrope Polyester hoher Festigkeit in der Regel geringe Zähigkeit und thermotrope Polyester hoher Zähigkeit in der Regel weniger ausgeprägte Festigkeit besitzen.

Aufgabe der Erfindung war es daher, thermotrope vollaromatische Polyester bereitzustellen, die gegenüber den Polyestern der DE-OS 20 25 971 besser verarbeitbar sind und dennoch hervorragende mechanische Eigenschaften aufweisen.

Bevorzugte neue thermotrope vollaromatische Polyester sollten bei einer Temperatur unterhalb 370 °C, vorzugsweise unterhalb 350 °C, insbesondere unterhalb 330 °C thermoplastisch verarbeitbar sein.

Weitere Aufgabe der Erfindung war es, thermotrope vollaromatische Polyester zur Verfügung zu stellen, die durch thermoplastische Verformung zu Formteilen verarbeitet werden können, welche sowohl hohe mechanische Festigkeit als auch hohe Zähigkeit besitzen.

Bevorzugte neue thermotrope voll-aromatische Polyester sollten eine Schlagzähigkeit von mindestens 20, vorzugsweise von mindestens 30, insbesondere von mindestens 40 kJ/m$^2$ besitzen. Ausserdem sollten diese bevorzugten Polyester eine Kerbschlagzähigkeit vom mindestens 10, vorzugsweise von mindestens 20, insbesondere von mindestens 25 kJ/m$^2$ haben. Weiterhin sollten diese bevorzugten Polyester einen Biege-E-Modul von mindestens 6000, vorzugsweise von mindestens 7000, insbesondere von mindestens 8000 MPa besitzen.

Überraschenderweise wurde gefunden, dass voll-aromatische Polyester, die einkondensierte Reste von p-Hydroxybenzoesäure, Isophthalsäure und gegebenenfalls Terephthalsäure sowie einerseits von Hydrochinon und/oder 4,4'-Dihydroxydiphenyl und andererseits von 3,4'- und/oder 4,4'-Dihydroxybenzophenon enthalten, die gewünschte Kombination vorteilhafter Eigenschaften besitzen.

Gegenstand der Erfindung sind thermotrope voll-aromatische Polyester auf Basis von
(a) (gegebenenfalls substituierter) p-Hydroxybenzoesäure,
(b) Isophthalsäure und gegebenenfalls Terephthalsäure,
(c) Hydrochinon und/oder 4,4'-Dihydroxydiphenyl und
(d) 3,4'- und/oder 4,4'-Dihydroxybenzophenon, wobei die Polyester die einkondensierten Reste
(a) in einer Konzentration von 50 bis 80, vorzugsweise 55 bis 70, insbesondere 60 bis 66 Mol-%, die einkondensierten Reste
(c) in einer Konzentration von 15 bis 48, vorzugsweise 20 bis 41, insbesondere 20 bis 35 Mol-%, und die einkondensierten Reste
(d) in einer Konzentration von 2 bis 30, vorzugsweise 4 bis 25, insbesondere 5 bis 20 Mol-%, jeweils bezogen auf die Summe der einkondensierten Reste (a), (c) und (d), enthalten, das Molverhältnis der einkondensierten Reste b/(c+d) 0,95 bis 1,05 und der Anteil Terephthalsäurereste an den Resten (b) maximal 30 Mol-% betragen.

Bevorzugte (a) p-Hydroxybenzoesäuren sind durch $C_1$-$C_4$-Alkyl, $C_1$-$C_4$-Alkoxy, $C_6$-$C_{10}$-Aryl, $C_7$-$C_{12}$-Alkylaryl (wie Phenyl, Tolyl, Naphthyl) oder Halogen (vorzugsweise Chlor), kernsubstituierte p-Hydroxybenzoesäuren, wie z.B. 4-Hydroxy-2-methylbenzoesäure, 4-Hydroxy-3-methyl-benzoesäure, 2-Ethyl-4-hydroxybenzoesäure, 3-Ethyl-4-hydroxybenzoesäure, 4-Hydroxy-2-phenylbenzoesäure, 4-Hydroxy-3-phenylbenzoesäure oder 3-Chlor-4-hydroxybenzoesäure, vorzugsweise jedoch unsubstituierte p-Hydroxybenzoesäure selbst.

Die erfindungsgemässen Polyester können die Reste der Verbindungen (a) bis (d) in statistischer Verteilung, in Segmenten oder in Blöcken enthalten. Betreffend Komponente (a) ist darauf zu achten, dass längere Blöcke den Schmelzpunkt und die Schmelzviskosität stark erhöhen können.

Als Endgruppen können die erfindungsgemässen Polyester – COOH, – H, – OH, – $OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol, und aromatische Monocarbonsäuren, wie Diphenylcarbonsäuren und Naphthalincarbonsäuren. Kettenabbrecher können in Mengen von 0,5 bis 5 Mol-%, bezogen auf die Summe der Komponenten a und b, eingesetzt werden.

Gegebenenfalls können auch verzweigende drei- oder höherfunktionelle – vorzugsweise aromatische – Monomere in Mengen von 0,1 bis 1 Mol-%, bezogen auf die Summe der Komponenten a und b, wie z.B. Phloroglucin, 1, 3, 5-Benzoltricarbonsäure und 3,5-Dihydroxybenzoesäure, eingesetzt werden.

Die erfindungsgemässen Polyester besitzen in der Regel eine inhärente Viskosität von mindestens 0,5, vorzugsweise von mindestens 1,0, dl/g (gemessen an einer Lösung von 5 mg Polyester/ml p-Chlorphenol bei 45 °C). Sollten Polyester in p-Chlorphenol unlöslich sein, wird angenommen, dass sie die angegebene Mindestviskosität besitzen; sie sind somit erfindungsgemäss, sofern sie den Parametern des Hauptanspruchs genügen.

Die erfindungsgemässen Polyester besitzen vorzugsweise eine Schmelzviskosität von weniger als 1000 Pa.s, gemessen bei einer Schergeschwindigkeit von $10^3 sec^{-1}$ unter Verwendung einer Düse mit einem Länge/Durchmesserverhältnis von 20 bei einer Temperatur von weniger als 360 °C, vorzugsweise weniger als 330 °C.

Die erfindungsgemässen Polyester können nach verschiedenen Verfahren hergestellt werden, z.B. durch Kondensation bzw. Umesterung der reaktiven Derivate, der Verbindungen (a) bis (d) z.B. ihrer Ester bzw. Säurechloride, und anschliessende Polykondensation.

Beispiele für bevorzugte Ausgangsverbindungen sind also ihre Arylester, ihre Acylester und ihre Säurechloride.

Nach einem bevorzugten Syntheseverfahren werden die niederen Acylester, vorzugsweise die Acetate, der Verbindungen (a), (c) und (d) mit Isophthalsäure (b) und gegebenenfalls Terephthalsäure umgesetzt, wobei die Acylester auch in situ hergestellt werden können.

Diese Reaktionen können in der Schmelzphase durchgeführt werden; möglich ist jedoch auch die Reaktion in Gegenwart eines flüssigen wärmeüberleitenden Mediums, das einen hohen Siedepunkt hat.

Die Reste der Verbindungen (a) bis (d) werden im Verhältnis der Ausgangskomponenten in den Polyester eingebaut.

Es kann zweckmässig sein, sowohl die Kondensations- bzw. Umesterungsreaktionen als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutylzinn-diacetat, Di-butyl-dimethoxy-zinn. Besonders bevorzugt sind Magnesium-, Mangan-, Natrium-, Kalium- und Zinkacetat.

Die Katalysatormengen betragen vorzugsweise 0,001 bis 1, insbesondere 0,01 bis 0,2 Gew.-%,

bezogen auf das Gesamtgewicht der eingesetzten Monomeren.

Die erfindungsgemässen Polyester können bei Temperaturen von 160 bis 370 °C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann – vorzugsweise in Granulatform – einer Festphasennachkondensation unter vermindertem Druck bei Temperaturen von 200 bis 300 °C unterworfen werden; nach 5 bis 25 Stunden hat sich das Molekulargewicht erhöht, und die daraus resultierenden Eigenschaften des Polyesters sind merklich verbessert.

Weiterer Gegenstand der Erfindung ist also ein Verfahren zur Herstellung der neuen Polyester durch Umsetzung der Komponenten (a) bis (d) bzw. ihrer reaktionsfähigen Derivate, die auch in situ hergestellt werden können, gegebenenfalls in Gegenwart von Kettenabbrechern, Verzweigungsmitteln und Katalysatoren, bei Temperaturen von 160 bis 370 °C, gegebenenfalls unter vermindertem Druck.

Die erfindungsgemässen thermotropen Polyester können infolge ihrer relativ geringen Schmelzviskosität vorteilhaft aus der Schmelze zu Spritzgussformteilen, Filamenten, Fasern, Bändern und Filmen verarbeitet werden, wobei durch auftretende Scherkräfte eine Molekülorientierung erzielt wird, die in hohem Masse von der Stärke der Scherkräfte beeinflusst wird. Desweiteren zeigen sie eine ausgeprägte Strukturviskosität, das heisst, dass die Schmelzviskosität bei Erhöhung der Scherkräfte stark abfällt. Geeignete Verarbeitungsverfahren sind Spritzguss, Extrusion, Pressen und Schmelzspinnen.

Aus den erfindungsgemässen Polyestern können Formteile hoher Zugfestigkeit, ausserordentlicher Zähigkeit und grosser Dimensionsstabilität hergestellt werden. Da die Polyester ausserordentlich chemikalienresistent und flammwidrig sind, eignen sie sich bevorzugt zur Herstellung von
– elektrotechnischen Artikeln, wie z. B. Isolatoren, gedruckten Schaltungen, Steckkontakten, Armaturenteilen,
– Teilen chemisch-technischer Apparate, wie z. B. Rohren, Behälterauskleidungen, Rotoren, Gleitlagern, Dichtungen,
– Teilen der Flugzeuginnenausstattung,
– Teilen medizinisch-technischer Geräte, wie z. B. Bauteilen von Klimaanlagen, Ventilteilen.

Die erfindungsgemässen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5 bis 65 Gew.-%, bezogen auf verstärkte bzw. gefüllte Formmasse, sind sie bestens geeignet.

Weiterer Gegenstand der Erfindung ist also die Verwendung der neuen Polyester zur Herstellung von Formkörpern, Filamenten, Fasern und Filmen.

Beispiele

Die Prüfung der Schlagzähigkeit $a_n$ und Kerbschlagzähigkeit $a_k$ erfolgte an Normkleinstäben gemäss DIN 53 453 (ISO/R 179) bei 23 °C jeweils an 10 Prüfkörpern.

Die Bestimmung der Biegefestigkeit wurde an Normkleinstäben gemäss DIN 53 452 (ISO R 178) durchgeführt. Der Biege-E-Modul wurde gemäss DIN 53 457 ermittelt.

Die Messung der Wärmeformbeständigkeit erfolgte durch Bestimmungen der Vicat-B-Erweichungstemperatur gemäss DIN 53 460 (ISO 306).

Vergleich 1

In ein 1 l-Planschliffgefäss mit Planschliffdeckel, Rührer, Stickstoffeinleitung und einem Destillationsaufsatz, der mit einem Kühler verbunden war, wurden die folgenden Substanzen eingewogen:
2,4 Mol ≙ 331,49 g p-Hydroxybenzoesäure,
1,44 Mol ≙ 239,23 g Isophthalsäure,
1,44 Mol ≙ 158,56 g Hydrochinon,
6,33 Mol ≙ 646,23 g Acetanhydrid,
0,1 g Magnesiumacetat wasserfrei und
0,15 g Antimontrioxid.

Unter Stickstoffatmosphäre wurde mittels Salzbad auf 170 °C erhitzt. Sobald die Destillation von Essigsäure nachliess (nach ca. 45 Minuten), wurde die Temperatur im Reaktionsgefäss im Verlauf einer Stunde auf 250 °C und im Verlauf einer weiteren Stunde auf 330 °C erhöht. Nach Beendigung der Destillation wurde der Druck im Verlauf von 30 Minuten bis auf ca. 1 mbar gesenkt.

Während dieser Vakuumphase nahm die Viskosität der entstandenen Polymerschmelze stark zu. Die Schmelze wurde daher langsamer gerührt.

Am Ende dieser Phase war eine Gesamtmenge von 709 g Essigsäure (enthält restliches Acetanhydrid) aufgefangen worden.

Der erhaltene hell-braune Polyester wurde gemahlen und bei 250 °C einer Festphasennachkondensation unterworfen (bei einem Vakuum von ca. 1 mbar, 24 Stunden). Die inhärente Viskosität des so erhaltenen Polyesters betrug 1,2 dl/g.

Beispiel 1

In das im Vergleich 1 beschriebene Reaktionsgefäss wurden die folgenden Substanzen eingefüllt:
2,4 Mol ≙ 331,49 g p-Hydroxybenzoesäure,
1,44 Mol ≙ 239,23 g Isophthalsäure,
1,2 Mol ≙ 132,13 g Hydrochinon,
0,24 Mol ≙ 51,42 g 4,4'-Dihydroxybenzophenon,
6 Mol ≙ 612,54 g Acetanhydrid,
0,1 g Magnesiumacetat (wasserfrei) und
0,15 g Antimon-III-oxid
Unter Stickstoffatmosphäre wurde mittels Salzbad auf 170 °C aufgeheizt. Nach einer Stunde bei 170 °C wurde die Reaktionstemperatur auf 220 °C und im Verlauf von weiteren 2 Stunden auf 330 °C erhöht. Nach Beendigung der Destillation wurde der Druck im Verlauf von ca. 20 Minuten bis auf 2,5 mbar gesenkt. Während der Vakuumphase blieb das Produkt gut rührbar. Am Ende dieser Phase war eine Gesamtmenge von 705 g Essigsäure (enthält restliches Acetanhydrid) aufgefangen worden.

Das erhaltene hell-beige Produkt wurde gemahlen und bei 250 °C einer Festphasennachkondensation unterworfen (ca. 1 mbar/24 Stunden). Die inhärente Viskosität des so behandelten Polyesters betrug 1,27 dl/g. Im Bereich von 320 °C bis 400 °C wurde eine optisch anisotrope Schmelzphase beobachtet.

Beispiele 2 bis 10

In der in Beispiel 1 beschriebenen Reaktionsapparatur und nach dem dort beschriebenen Verfahren wurden weitere Polyester hergestellt. Art und Menge der Ausgangsprodukte sind in Tabelle 1 aufgeführt.

Tabelle 1

| Bei-spiel | (a) (Mol) | (b) (Mol) | | (c) (Mol) | | (d) (Mol) | | Acetanhydrid (Mol) | $\eta$ inh (dl/g) | anisotrope Schmelze |
|---|---|---|---|---|---|---|---|---|---|---|
| 2 | 2,4 | 1,44 | IS | 1 | Hy | 0,44 | 4,4'-D | 6,3 | 175 | 310–400 °C |
| 3 | 2,4 | 1,44 | IS | 1,34 | Hy | 0,1 | 4,4'-D | 6,3 | 1,15 | 330–400 °C |
| 4 | 3 | 1 | IS | 0,8 | Hy | 0,2 | 4,4'-D | 6,0 | 1,04 | 300–400 °C |
| 5 | 2,6 | 1,4 | IS | 1,2 | Hy | 0,2 | 4,4'-D | 6,4 | 0,75 | 290–400 °C |
| 6 | 2,4 | 1,2 | IS | 1,0 | Hy | 0,2 | 4,4'-D | 5,8 | 1,18 | 295–400 °C |
| 7 | 2,94 | 1,26 | IS | 0,86 | Hy | 0,4 | 4,4'-D | 6,4 | 1,05 | 305–400 °C |
| 8 | 2,94 | 1,26 | IS | 1,16 | Hy | 0,1 | 4,4'-D | 6,4 | 1,37 | 330–400 °C |
| 9 | 2,4 | 1,2 IS 0,24 TS | | 1,2 | Hy | 0,24 | 4,4'-D | 6,3 | 1,93 | 310–400 °C |
| 10 | 2,4 | 1,0 IS 0,44 TS | | 1,2 | Hy | 0,34 | 4,4'-D | 6,3 | 2,4 | 330–400 °C |

Abkürzungen:
IS = Isophthalsäure;    TS = Terephthalsäure;    Hy = Hydrochinon; 4,4'-D = 4,4'-Dihydroxybenzophenon

Zur Prüfung der mechanischen Eigenschaften wurden aus den Polyestern des Vergleichs 1 und der Beispiele 1 bis 10 durch Spritzguss Normkleinstäbe hergestellt. In Tabelle 2 sind die gemessenen Werte aufgeführt.

Tabelle 2

| Bei-spiel | Vicat B (°C) | $a_n/a_k$ (kJ/m$^2$) | Biegefestigkeit (MPa) | Biege-E-Modul (MPa) | Massetemperatur (°C) |
|---|---|---|---|---|---|
| 1 | 144 | 30*/18* | 199 | 8.500 | 330 |
| 2 | 143 | 85*/42* | 209 | 8.400 | 330 |
| 3 | 143 | 18*/10 | 184 | 9.200 | 350 |
| 4 | 132 | 24*/20* | 132 | 8.000 | 330 |
| 5 | 132 | 21*/13* | 125 | 7.700 | 320 |
| 6 | 136 | 44*/35* | 148 | 9.300 | 340 |
| 7 | 145 | 37*/24 | 156 | 6.000 | 350 |
| 8 | 154 | 27*/17* | 202 | 10.700 | 350 |
| 9 | 144 | 36*/29* | 188 | 10.350 | 320 |
| 10 | 146 | 28*/28* | 194 | 10.900 | 340 |
| Vergleich 1 | 140 | 8/6 | 150 | 6.500 | 340 |

*) = angebrochen

## Patentansprüche

1. Thermotrope voll-aromatische Polyester auf Basis von
(a) (gegebenenfalls substituierter) p-Hydroxybenzoesäure,
(b) Isophthalsäure und gegebenenfalls Terephthalsäure,
(c) Hydrochinon und/oder 4,4'-Dihydroxydiphenyl,
(d) 3,4'- und/oder 4,4'-Dihydroxybenzophenon,
wobei die Polyester die einkondensierten Reste
(a) in einer Konzentration von 50 bis 80 Mol-%,
die einkondensierten Reste
(c) in einer Konzentration von 15 bis 48 Mol-%,
die einkondensierten Reste
(d) in einer Konzentration von 2 bis 30 Mol-%,
jeweils bezogen auf die Summe der einkondensierten Reste (a), (c) und (d), enthalten, das Molverhältnis der einkondensierten Reste b/(c+d) 0,95 bis 1,05 und der Anteil Terephthalsäurereste an den Resten (b) maximal 30 Mol-% betragen.

2. Polyester nach Anspruch 1, dadurch gekennzeichnet, dass sie die einkondensierten Reste
(a) in einer Konzentration von 55 bis 70 Mol-%,
die einkondensierten Reste
(c) in einer Konzentration von 20 bis 41 Mol-%,
und die einkondensierten Reste
(d) in einer Konzentration von 4 bis 25 Mol-%,
jeweils bezogen auf die Summe der einkondensierten Reste (a), (c) und (d), enthalten.

3. Polyester nach Ansprüchen 1 und 2, dadurch gekennzeichnet, dass sie die einkondensierten Reste
(a) in einer Konzentration von 60 bis 66 Mol-%,
die einkondensierten Reste
(c) in einer Konzentration von 20 bis 35 Mol-%,
und die einkondensierten Reste
(d) in einer Konzentration von 5 bis 20 Mol-%,
jeweils bezogen auf die Summe der einkondensierten Reste (a), (c) und (d), enthalten.

4. Verfahren zur Herstellung der Polyester nach Ansprüchen 1 bis 3 durch Umsetzung der reaktionsfähigen Derivate der Komponenten (a) bis (d), die auch in situ hergestellt werden können, gegebenenfalls in Gegenwart von Kettenabbrechern, Verzweigungsmitteln und Katalysatoren, bei Temperaturen von 160 bis 370 °C, gegebenenfalls unter vermindertem Druck.

5. Verfahren nach Anspruch 4, dadurch gekennzeichnet, dass sich eine Festphasennachkondensation anschliesst.

6. Verwendung der Polyester nach Ansprüchen 1 bis 3 zur Herstellung von Formkörpern, Filamenten, Fasern und Filmen.

## Claims

1. Thermotropic, fully aromatic polyesters based on
(a) (optionally substituted) p-hydroxybenzoic acid,
(b) isophthalic acid and optionally terephthalic acid,
(c) hydroquinone and/or 4,4'-dihydroxydiphenyl and

(d) 3,4'- and/or 4,4'-dihydroxybenzophenone,
the polyesters containing the condensed residues
(a) at a concentration of 50 to 80 mol-%,
the condensed residues
(c) at a concentration of 15 to 48 mol-%
and the condensed residues
(d) at a cencentration of 2 to 30 mol-%,
based in each case on the sum of the condensed residues (a), (c) and (d), and the molar ratio of the condensed residues b/(c+d) amounting to 0.95 – 1.05 and the proportion of terephthalic acid residues to residues (b) amounting to at the most 30 mol-%.

2. Polyesters according to claim 1, characterised in that they contain the condensed residues
(a) at a concentration of 55 to 70 mol-%,
the condensed residues
(c) at a concentration of 20 to 41 mol-%
and the condensed residues
(d) at a concentration of 4 to 25 mol-%,
based in each case on the sum of the condensed residues (a), (c) and (d).

3. Polyesters according to claims 1 and 2, characterised in that they contain the condensed residues
(a) at a concentration of 60 to 66 mol-%,
the condensed residues
(c) at a concentration of 20 to 35 mol-%
and the condensed residues
(d) at a concentration of 5 to 20 mol-%,
based in each case on the sum of the condensed residues (a), (c) and (d).

4. Process for the preparation of the polyesters according to claims 1 to 3 by reaction of the reactive derivatives of components (a) to (d), which may also be prepared in situ, optionally in the presence of chain breaking agents, branching agents and catalysts, at temperatures of 160 to 370 °C, optionally at reduced pressure.

5. Process according to claim 4, characterised in that it is followed by a solid phase after-condensation.

6. Use of the polyesters according to claims 1 to 3 for the production of moulded articles, filaments, fibres and films.

## Revendications

1. Polyesters thermotropes entièrement aromatiques à base
(a) d'acide p-hydroxybenzoïque (éventuellement substitué,
(b) d'acide isophtalique et, le cas échéant d'acide téréphtalique,
(c) d'hydroquinone et/ou de 4,4'-dihydroxydiphényle,
(d) de 3,4'- et/ou de 4,4'-dihydroxybenzophénones,
les polyesters contenant les restes
(a) incorporés par condensation à une concentration de 50 à 80 moles %,
les restes
(c) incorporés par condensation à une concentration de 15 à 48 moles %,
les restes

(d) incorporés par condensation à une concentration de 2 à 30 moles %,

dans chaque cas par rapport à la somme des restes (a), (c) et (d) incorporés par condensation, le rapport molaire des restes b/(c+d) incorporés par condensation ayant une valeur de 0,95 à a1,05 et la proportion des restes d'acide téréphtalique par rapport aux restes (b) s'élevant au maximum à 30 moles %.

2. Polyesters suivant la revendication 1, caractérisés en ce qu'ils contiennent les restes

(a) incorporés par condensation à une concentration de 55 à 70 moles %,

les restes

(c) incorporés par condensation à une concentration de 20 à 41 moles %

et les restes

(d) incorporés par condensation à une concentration de 4 à 25 moles %,

dans chaque cas par rapport à la somme des restes (a), (c) et (d) incorporés par condensation.

3. Polyesters suivant les revendications 1 et 2, caractérisés en ce qu'ils contiennent les restes

(a) incorporés par condensation à une concentration de 60 à 66 moles %,

les restes

(c) incorporés par condensation à une concentration de 20 à 35 moles %

et les restes

(d) incorporés par condensation à une concentration de 5 à 20 moles %,

dans chaque cas par rapport à la somme des restes (a), (c) et (d) incorporés par condensation.

4. Procédé de production des polyesters suivant les revendications 1 à 3 par réaction des dérivés réactifs des composants (a) à (d), qui peuvent aussi être produits in situ, éventuellement en présence d'agents de terminaison de chaîne, d'agents de ramification et de catalyseurs, à des températures de 160 à 370 °C, le cas échéant sous pression réduite.

5. Procédé suivant la revendication 4, caractérisé en ce qu'une post-condensation en phase solide y fait suite.

6. Utilisation des polyesters suivant les revendications 1 à 3 pour la production de pièces moulées, de filaments, de fibres et de films.